# EUROPEAN PATENT APPLICATION

(11) **EP 4 803 365 A1**
(43) Date of publication of application: **09.09.2026**
(21) Application number: 26162613.9
(22) Date of filing: 05.03.2026
(51) Int. Cl.: B60N 2/75

(54) **ELECTRIC ARMREST AND VEHICLE SEAT MOUNTED WITH ELECTRIC ARMREST**

(30) Priority: 05.03.2025 CN 202510256012; 05.03.2025 CN 202520385336 U
(71) Applicant: Adient (Chongqing) Automotive Components Co., Ltd., Liangjiang New Area, Chongqing 401122 (CN)
(72) Inventor: DENG, Xinyuan, Chongqing, Liangjiang New Area, 401122 (CN); LI, Yajun, Chongqing, Liangjiang New Area, 401122 (CN); JIA, Wei, Chongqing, Liangjiang New Area, 401122 (CN); LI, Qingmao, Chongqing, Liangjiang New Area, 401122 (CN); XIN, Yi, Chongqing, Liangjiang New Area, 401122 (CN); LIN, Bijun, Chongqing, Liangjiang New Area, 401122 (CN); ZHANG, Zhishen, Chongqing, Liangjiang New Area, 401122 (CN); TAN, Muxing, Chongqing, Liangjiang New Area, 401122 (CN); FAN, Jiang, Chongqing, Liangjiang New Area, 401122 (CN)
(74) Representative: Liedtke & Partner Patentanwälte

(57) **Abstract**

The present invention discloses an electric armrest and a vehicle seat mounted with the electric armrest. The electric armrest comprises: a base assembly (1), a transmission rod (2), a rotating cylinder (4), a power assembly (3) and an armrest body (6). The transmission rod (2) is slidably mounted axially relative to the base assembly (1), and provided with a first guiding structure (21). A side wall of rotating cylinder (4) is provided with a spiral groove (4a). The first guiding structure (21) is slidably sleeved in the spiral groove (4a). A side portion of the rotating cylinder (4) is provided with a second guiding structure (41) protruding outwards along a radial direction thereof. A guide groove (1a) is provided on the base assembly (1), the second guiding structure (41) is slidably sleeved in the guide groove (1a), and an end portion of the rotating cylinder (4) is fixedly connected to the armrest body (6). The armrest body (6) is able to extend, retract or rotate under the drive of the power assembly (3). The vehicle seat comprises a backrest (A), wherein a side portion of the backrest (A) is mounted with the electric armrest, a side wall of the backrest (A) is provided with a storage groove (B), and the armrest body (6) is able to be stored in the storage groove (B). The beneficial effects of the present invention are that: the armrest can swing at large angles and has a small sweep space, and the armrest of the vehicle seat is stored in a compact layout.

## Description

### Technical Field

The present invention relates to the technical field of automotive parts, specifically to an electric armrest and a vehicle seat mounted with the electric armrest.

### Background Art

Conventional automotive seat armrests are primarily in two forms: one is positioned on the side of the seat backrest and can be manually rotated forward, and the other is fixed to both sides of the seat. The conventional two forms are limited in function and not convenient to use, failing to meet the increasingly diverse in-vehicle application environments.

Both of these armrest mounting structures will take up the side space of the backrest when the armrest is not in use. For this reason, a concealed seat armrest has appeared on the market. For example, Patent Publication No. CN114407744A discloses a retractable rotating mechanism for an electric armrest, wherein the mechanism is mainly composed of a cylindrical cam with a gear, a fixing sleeve, pin A, pin B, a rotating shaft, and a motor; the cylindrical cam with the gear is engaged with the fixing sleeve, and the fixing sleeve, together with a stepped hollow shaft, limits the other degrees of freedom of the cylindrical cam with the gear, leaving only the rotational freedom of the cylindrical cam with the gear; the cylindrical cam with the gear is provided with a shift gear and track slot C; the rotating shaft is provided with track slots, which are track slot A and track slot B from right to left; pin B is fixed on the rotating shaft, and pin B moves relative to track slot C on the cylindrical cam with the gear; and pin A is fixed on the fixing sleeve, and pin A moves linearly relative to track slot A and rotates relative to track slot B.

On the basis of the retractable rotating mechanism for the armrest described in the aforementioned patent document, the armrest is allowed to be concealed on the side of the backrest, reducing the space occupied on both sides of the seat when folded. However, it still has the following shortcomings: The armrest's extension and rotation movements occur simultaneously, forming a compound motion. On the one hand, the armrest cannot rotate independently, making it unable to accommodate large-angle swings. On the other hand, the simultaneous extension and rotation allow the armrest to swing in a larger sweeping space, and there is still room for improvement in the product's compactness after being folded.

### Summary of the Invention

In view of the foregoing, the present invention provides an electric armrest that allows the armrest to be folded in a concealed manner on the side of the backrest, with the extension, retraction and rotation of the armrest during the unfolding process being independent movements.

To achieve the above objective, the technical solution of the present invention is as follows:
An electric armrest, comprising: a base assembly for being fixedly mounted inside a backrest; a transmission rod slidably mounted axially relative to the base assembly, wherein an outer end side wall of the transmission rod is provided with a first guiding structure protruding outwards along a radial direction thereof; a rotating cylinder rotatably sleeved on an outer end of the transmission rod, wherein a side wall of the rotating cylinder is provided with a spiral groove, the first guiding structure is slidably sleeved inside the spiral groove, and a side portion of the rotating cylinder is provided with a second guiding structure protruding outwards along a radial direction thereof; and an armrest body fixedly connected at an outer end of the rotating cylinder; wherein the guide groove is provided on the base assembly, the second guiding structure is slidably sleeved in the guide groove, and the guide groove has a bar-shaped groove section parallel to a sliding direction of the transmission rod and an arc-shaped groove section connected vertically at an outer end of the bar-shaped groove section;
the base assembly is provided with a power assembly for driving the transmission rod to slide relative to the base assembly; and in a sliding stroke of the transmission rod, when the second guiding structure is located in the bar-shaped groove section, the rotating cylinder slides synchronously with the transmission rod, so as to drive the armrest body to extend and retract in a width direction of the backrest; when the second guiding structure is located in the arc-shaped groove section, under the guidance of the first guiding structure and the spiral groove, the rotating cylinder is able to rotate relative to the transmission rod, so as to drive the armrest body to rotate.

With the above structure, the armrest's extension and rotation movements are independent, allowing for large-angle swinging, and making it convenient to use and able to meet the increasingly diverse in-vehicle application environments. Furthermore, the armrest has a small sweeping space during swinging, resulting in a simple and compact overall layout.

Preferably: the power assembly comprises a motor fixed on the base assembly, a lead screw driven by the motor and a threaded fitting threadedly engaged with the lead screw, the lead screw is rotatably provided on the base assembly, the transmission rod is of a hollow structure, and the threaded fitting is fixedly fitted inside the transmission rod. With the above structure, power is provided for smooth movement of the armrest.

Preferably: the transmission rod is sleeved on the lead screw with a clearance therebetween, a side portion of the transmission rod is provided with an anti-rotation slot, the base assembly is fixedly provided with an anti-rotation pin, and an inner end of the anti-rotation pin is slidably engaged with the anti-rotation slot. With the above structure, the structure is simple, and the rotation of the transmission rod is limited.

Preferably: the base assembly comprises a support base and a sleeve fixedly mounted on the support base, the rotating cylinder is mounted in the sleeve, the anti-rotation pin is fixedly inserted in a side wall of the sleeve, and the guide groove is provided on the side wall of the sleeve. With the above structure, support is provided, and it is easy for installation.

Preferably: the support base axially extends along the transmission rod, and is provided with an arc-shaped groove adapted to an outer wall of the sleeve, and a lower end of the sleeve is supported in the arc-shaped groove and fixedly connected to the support base. With the above structure, it is easy for installation.

Preferably: a transition position between the bar-shaped groove section and the arc-shaped groove section is an arc-shaped configuration. With the above structure, it makes the movement of the armrest smoother and more fluid.

Preferably: a side wall of the transmission rod is provided with a pin hole, the threaded fitting is provided with a groove at a position corresponding to the pin hole, and a pin is inserted in the pin hole and the groove, so that the threaded fitting is fixed inside the transmission rod. With the above structure, the structure is simple, and it is easy for installation.

Preferably: an inner end portion of the rotating cylinder is provided with an avoidance groove along an axial direction thereof, and when the second guiding structure is located at an inner end of the guide groove, the anti-rotation pin passes through the avoidance groove. With the above structure, the structure is compact, and the anti-rotation pin is avoided.

Preferably: the transmission rod is symmetrically provided with two first guiding structures, the rotating cylinder is provided with two symmetrical spiral grooves, and the two first guiding structures are slidably sleeved in the two spiral grooves, respectively. With the above structure, it is easy for installation.

The present invention further provides a vehicle seat which is intended to solve the problem of insufficient compactness in the space layout when the armrest of the vehicle seat is folded.

To achieve the above objective, the technical solution of the present invention is as follows:
A vehicle seat, comprising a backrest, wherein a side portion of the backrest is mounted with the electric armrest, a side wall of the backrest is provided with a storage groove, and the power assembly drives the transmission rod to slide inwards, enabling the armrest body to be stored in the storage groove. With the above structure, the armrest can be stored in the storage groove on the side wall of the backrest in a concealed manner, resulting in a compact structural layout.

Compared with the prior art, the present invention has the following beneficial effects:
1. The side of the vehicle seat has a storage groove adapted to the shape of the armrest body, and the armrest body can be stored in the storage groove in a concealed manner, resulting in a simple and compact overall layout structure.
2. The extension and rotation movements of the armrest body are performed independently. It first extends outwards and then rotates forward, enabling large-angle swing adjustment with swinging in a small sweep space. The movement is smooth without jamming, enabling to meet the needs of multi-functional vehicle seats and improve the comfort of the seat.

### Brief Description of the Drawings

- Fig. 1: is a schematic structural diagram of a vehicle seat;
- Fig. 2: is a schematic structural diagram of an electric armrest;
- Fig. 3: is an exploded diagram showing the internal structure of the electric armrest;
- Fig. 4: is an exploded diagram showing how a transmission rod 2 is connected to a threaded fitting 33;
- Fig. 5: is a cross-section view showing a mounting relationship of the electric armrest;
- Fig. 6: is a schematic diagram of an armrest body 6 extending outwards;
- Fig. 7: is a schematic diagram of the armrest body 6 rotating;
- Fig. 8: is a schematic diagram of the armrest body 6 being mounted on a vehicle seat; and
- Fig. 9: is a schematic diagram of an application of the electric armrest in a one-touch-to-bed function in a vehicle seat.

### Detailed Description of the Embodiments

The present invention will be further described below in conjunction with the embodiments and the drawings.

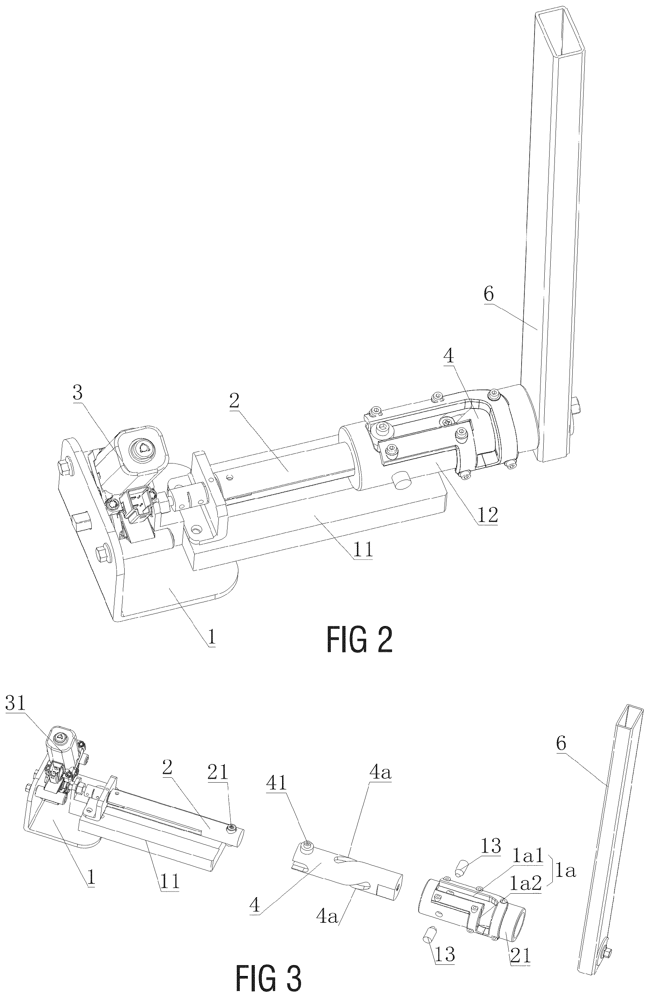

As shown in Figs. 2 and 3, an electric armrest comprises a base assembly 1 and a transmission rod 2, wherein the base assembly 1 is used to be fixedly mounted inside a seat backrest A, and the transmission rod 2 is arranged along the length direction of the seat backrest A and slidably mounted axially relative to the base assembly 1. The electric armrest further comprises an armrest body 6. A rotating cylinder 4 is rotatably sleeved on the outer end of the transmission rod 2, and the outer end portion of the rotating cylinder 4 is fixedly connected to the armrest body 6. The outer end side wall of the transmission rod 2 is symmetrically provided with two first guiding structures 21 protruding outwards along a radial direction thereof. The side wall of the rotating cylinder 4 is provided with two symmetrical spiral grooves 4a, and the two first guiding structure 21 are slidably sleeved in the two spiral grooves 4a, respectively. The side portion of the rotating cylinder 4 is provided a second guiding structure 41 protruding outwards in a radial direction thereof. A guide groove 1a is provided on the base assembly 1, and the second guiding structure 41 is slidably sleeved in the guide groove 1a.

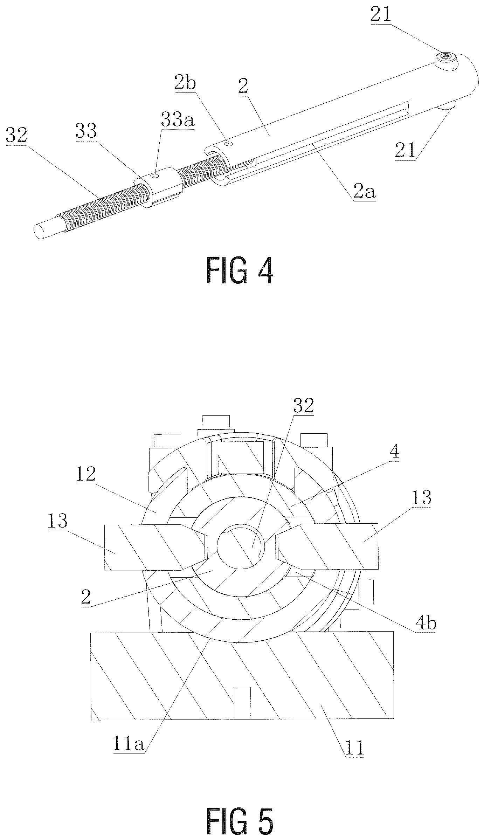

As shown in Figs. 3 and 5, the base assembly 1 comprises a support base 11 and a sleeve 12 fixedly mounted on the support base 11. The rotating cylinder 4 is mounted in the sleeve 12. The support base 11 axially extends along the transmission rod 2, and is provided with an arc-shaped groove 11a adapted to the outer wall of the sleeve 12. The lower end of the sleeve 12 is supported in the arc-shaped groove 11a and fixedly connected to the support base 11. As shown in the figures, the guide groove 1a is provided on the side wall of the sleeve 12, and the guide groove 1a comprises a bar-shaped groove section 1a1 parallel to the sliding direction of the transmission rod 2 and an arc-shaped groove section 1a2 connected vertically to the outer end of the bar-shaped groove section 1a1.

As shown in Figs. 3 and 4, the base assembly 1 is further provided with a power assembly 3 for driving the transmission rod 2, and the power assembly 3 comprises a motor 31 fixed on the base assembly 1, a lead screw 32 driven by the motor 31, and a threaded fitting 33 that is threadedly engaged with the lead screw 32. The lead screw 32 is arranged along the length direction of the seat backrest A and rotatably provided on the base assembly 1. The transmission rod 2 is of a hollow structure. The threaded fitting 33 is fixedly fitted inside the transmission rod 2. The side wall of the transmission rod 2 is provided with a pin hole 2b. The threaded fitting 33 is provided with a groove 33a at a position corresponding to the pin hole 2b. A pin is inserted in the pin hole 2b and the groove 33a, so that the threaded fitting 33 is fixed inside the transmission rod 2.

As shown in Figs. 4 and 5, two anti-rotation slots 2a are symmetrically provided on the side portion of the transmission rod 2 along an axial direction, two anti-rotation pins 13 protruding inwards is fixedly inserted in the side wall of the sleeve 12, and the inner ends of the two anti-rotation pins 13 are slidably engaged with the two anti-rotation slots 2a, respectively, which is used to limit the rotation of the transmission rod 2. The inner end portion of the rotating cylinder 4 is provided with an avoidance groove 4b along an axial direction thereof, and the avoidance groove 4b is used to avoid the anti-rotation pin 13. When the second guiding structure 41 is located at the inner end of the guide groove 1a, the anti-rotation pin 13 passes through the avoidance groove 4b.

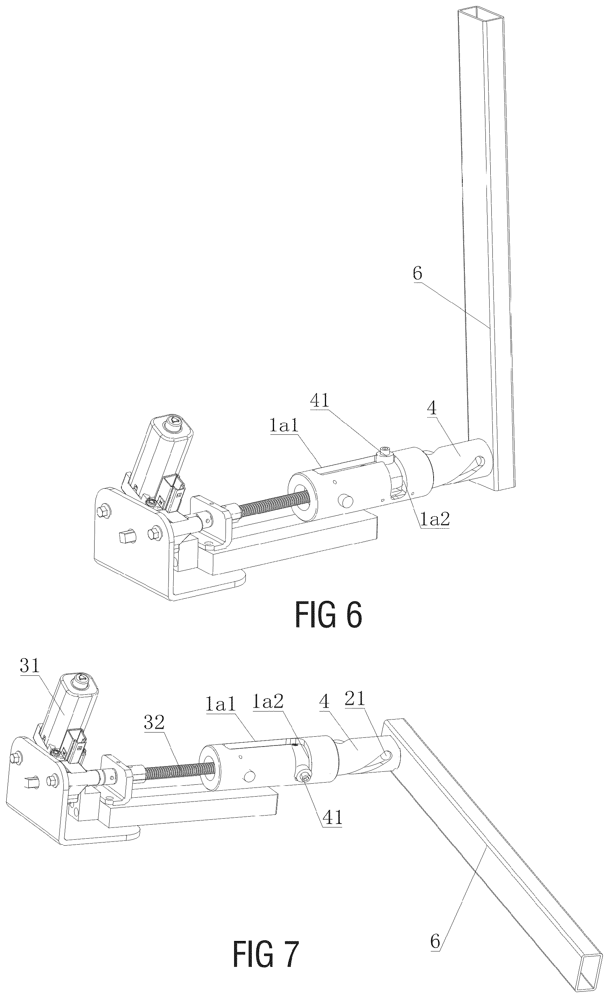

In this embodiment, the power assembly 3 drives the transmission rod 2 relative to the base assembly 1. As shown in Fig. 6, in the sliding stroke of the transmission rod 2, when the second guiding structure 41 is located in the bar-shaped groove section 1a1, the rotating cylinder 4 slides synchronously with the transmission rod 2, so as to drive the armrest body 6 to extend and retract in the width direction of the backrest A. As shown in Fig. 7, when the second guiding structure 41 is located in the arc-shaped groove section 1a2, under the guidance of the first guiding structure 21 and the spiral groove 4a, the rotating cylinder 4 is able to rotate relative to the transmission rod 2, so as to drive the armrest body 6 to rotate. In this process, since the transition positions between the bar-shaped groove section 1a1 and the arc-shaped groove section 1a2 is an arc-shaped configuration, the movement of armrest body 6 is smooth and fluid without jamming. The extension and rotation movements are performed independently, enabling the armrest body 6 to have a large-angle swing adjustment and a small sweep space, thereby meeting the needs of multifunction seats.

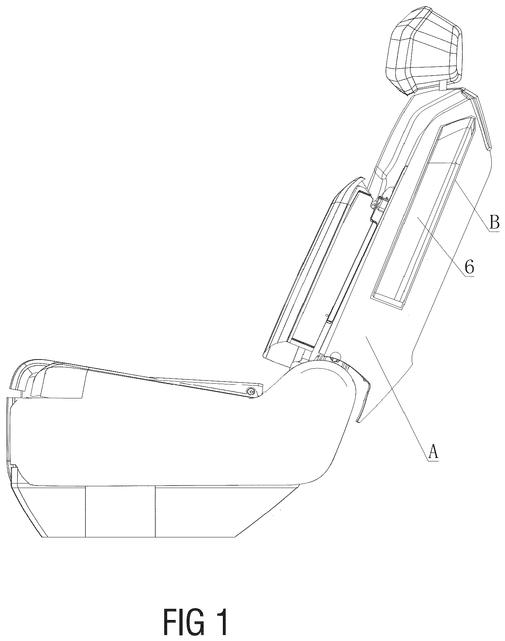

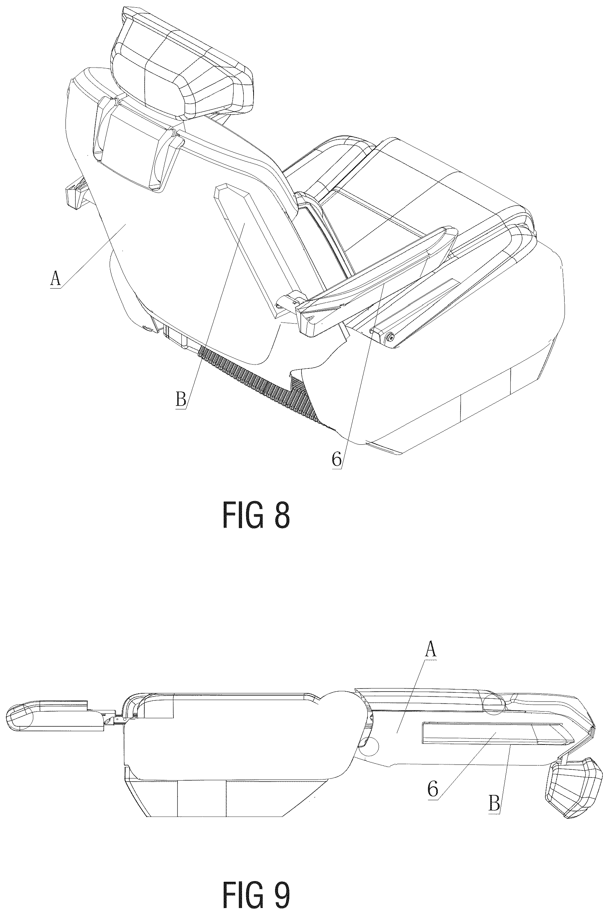

As shown in Figs. 1 and 8, a vehicle seat comprises a backrest A. The electric armrest described above is mounted on a side portion of the backrest A. A side wall of the backrest A is provided a bar-shaped storage groove B. The shape of the bar-shaped storage groove B is adapted to the shape of the armrest. The armrest body 6 can be fully stored in storage groove B when not in use, resulting in a compact layout. It can be smoothly and quickly unfolded when used. As shown in Fig. 9, when a one-touch-to-bed function of the seat is used, the power assembly 3 is able to drive the transmission rod 2 to slide inwards, and the armrest body 6 first rotates upwards, and then moves inwards to be stored in the storage groove B in a concealed manner.

After the seat backrest A is flatly placed, the armrest body is unobstructed, making it flexible to use and able to complement various functions of the vehicle seat, thereby improving the comfort of the seat.

The working principle of the unfolding process of the armrest body 6 is as follows: The motor 31 outputs power to drive the lead screw 32 to rotate. The transmission rod 2 moves synchronously with the threaded fitting 33, and slides outwards under the restriction of the anti-rotation pin 13. During the sliding process, the second guiding structure 41 is first located in the bar-shaped groove section 1a1. Since the first guiding structure 21 is restricted by the spiral groove 4a, the rotating cylinder 4 slides synchronously with the transmission rod 2, driving the armrest body 6 to extend outwards in the width direction of the backrest A. When the second guiding structure 41 moves to an end of the bar-shaped groove section 1a1, the armrest body 6 extends to an extreme position. Then, the second guiding structure 41 transitions from the bar-shaped groove section 1a1 to the arc-shaped groove section 1a2. Under the guidance of the first guiding structure 21 and the spiral groove 4a, the rotating cylinder 4 rotates relative to the transmission rod 2, driving the armrest body 6 to rotate. When the second guiding structure 41 moves to an end of the arc-shaped groove section 1a2, the armrest body 6 rotates to an extreme position.

The working principle of the folding process of the armrest body 6 is as follows: The motor 31 drives the lead screw 32 to rotate reversely. The threaded fitting 33 is threadedly engaged with the lead screw 32, and the transmission rod 2 moves synchronously with the threaded fitting 33. Under the engagement and restriction of the anti-rotation pin 13 and the anti-rotation slot 2a, the transmission rod 2 slides inwards. Under the guidance of the first guiding structure 21 and the spiral groove 4a, the rotating cylinder 4 rotates to drive the armrest body 6 to rotate upwards. The second guiding structure 41 moves along the arc-shaped groove section 1a2 to the transition position between the arc-shaped groove section 1a2 and the bar-shaped groove section 1a1. The armrest body 6 rotates from a horizontal state to a vertical state. The transmission rod 2 continues to slide inwards. The first guiding structure 21 slides to an end of the spiral groove 4a. The rotating cylinder 4 is restricted by the first guiding structure 21 to move inwards synchronously with the transmission rod 2.

The second guiding structure 41 moves along the bar-shaped groove section 1a1 to an end position, and the armrest body 6 is fully folded in the storage groove B.

Finally, it should be noted that the above description is only the preferred embodiments of the present invention; those skilled in the art, under the guidance of the present invention, can make various similar variations without departing from the spirit and claims of the present patent application, and such variations all fall within the scope of protection of the present patent application.

### List of References

- 1: base assembly
- 1a: guide groove
- 1a1: bar-shaped groove section
- 1a2: arc-shaped groove section2 transmission rod
- 2a: anti-rotation slot
- 2b: pin hole
- 3: power assembly
- 4: rotating cylinder
- 4a: spiral groove
- 4b: avoidance groove
- 6: armrest body
- 11: support base
- 11a: arc-shaped groove
- 12: sleeve
- 13: anti-rotation pin
- 21: first guiding structure
- 31: motor
- 32: lead screw
- 33: threaded fitting
- 33a: groove
- 41: second guiding structure

- A: backrest
- B: storage groove

## Claims

1. Electric armrest, comprising at least:
- an armrest body (6),
- a base assembly (1), in particular for being fixedly mounted inside a backrest (A);
- a transmission rod (2) slidably mounted axially relative to the base assembly (1),
wherein an outer end side wall of the transmission rod (2) is provided with a first guiding structure (21) protruding outwards along a radial direction thereof; a rotating cylinder (4) rotatably sleeved on an outer end of the transmission rod (2),
wherein a side wall of the rotating cylinder (4) is provided with a spiral groove (4a), the first guiding structure (21) is slidably sleeved inside the spiral groove (4a), and a side portion of the rotating cylinder (4) is provided with a second guiding structure (41) protruding outwards along a radial direction thereof; and the armrest body (6) fixedly connected at an outer end of the rotating cylinder (4);
wherein a guide groove (1a) is provided on the base assembly (1), the second guiding structure (41) is slidably sleeved in the guide groove (1a), and the guide groove (1a) has a bar-shaped groove section (1a1) parallel to a sliding direction of the transmission rod (2) and an arc-shaped groove section (1a2) connected vertically at an outer end of the bar-shaped groove section (1a1);
the base assembly (1) is provided with a power assembly (3) for driving the transmission rod (2) to slide relative to the base assembly (1); and in a sliding stroke of the transmission rod (2), when the second guiding structure (41) is located in the bar-shaped groove section (1a1), the rotating cylinder (4) slides synchronously with the transmission rod (2), so as to drive the armrest body (6) to extend and retract, in particular in a width direction of the backrest (A); when the second guiding structure (41) is located in the arc-shaped groove section (1a2), under the guidance of the first guiding structure (21) and the spiral groove (4a), the rotating cylinder (4) is able to rotate relative to the transmission rod (2), so as to drive the armrest body (6) to rotate.

2. Electric armrest according to claim 1, **characterised in that**: the power assembly (3) comprises a motor (31) fixed on the base assembly (1), a lead screw (32) driven by the motor (31) and a threaded fitting (33) threadedly engaged with the lead screw (32), the lead screw (32) is rotatably provided on the base assembly (1), the transmission rod (2) is of a hollow structure, and the threaded fitting (33) is fixedly fitted inside the transmission rod (2).

3. Electric armrest according to claim 2, **characterised in that**: the transmission rod (2) is sleeved on the lead screw (32) with a clearance therebetween, a side portion of the transmission rod (2) is provided with an anti-rotation slot (2a), the base assembly (1) is fixedly provided with an anti-rotation pin (13), and an inner end of the anti-rotation pin (13) is slidably engaged with the anti-rotation slot (2a).

4. Electric armrest according to claim 3, **characterised in that**: the base assembly (1) comprises a support base (11) and a sleeve (12) fixedly mounted on the support base (11), the rotating cylinder (4) is mounted in the sleeve (12), the anti-rotation pin (13) is fixedly inserted in a side wall of the sleeve (12), and the guide groove (1a) is provided on the side wall of the sleeve (12).

5. Electric armrest according to claim 4, **characterised in that**: the support base (11) axially extends along the transmission rod (2), and is provided with an arc-shaped groove (11a) adapted to an outer wall of the sleeve (12), and a lower end of the sleeve (12) is supported in the arc-shaped groove (11a) and fixedly connected to the support base (11).

6. Electric armrest according to anyone of the preceding claims, **characterised in that**: a transition position between the bar-shaped groove section (1a1) and the arc-shaped groove section (1a2) is an arc-shaped configuration.

7. Electric armrest according to anyone of the preceding claims 2 to 6, **characterised in that**: a side wall of the transmission rod (2) is provided with a pin hole (2b), the threaded fitting (33) is provided with a groove (33a) at a position corresponding to the pin hole (2b), and a pin is inserted in the pin hole (2b) and the groove (33a), so that the threaded fitting (33) is fixed inside the transmission rod (2).

8. Electric armrest according to anyone of the preceding claims 3 to 7, **characterised in that**: an inner end portion of the rotating cylinder (4) is provided with an avoidance groove (4b) along an axial direction thereof, and when the second guiding structure (41) is located at an inner end of the guide groove (1a), the anti-rotation pin (13) passes through the avoidance groove (4b).

9. Electric armrest according to anyone of the preceding claims, **characterised in that**: the transmission rod (2) is symmetrically provided with two first guiding structures (21), the rotating cylinder (4) is provided with two symmetrical spiral grooves (4a), and the two first guiding structures (21) are slidably sleeved in the two spiral grooves (4a), respectively.

10. Vehicle seat, comprising a backrest (A), **characterised in that**: a side portion of the backrest (A) is mounted with the electric armrest according to anyone of the preceding claims 1 to 9, a side wall of the backrest (A) is provided with a storage groove (B), and the power assembly (3) drives the transmission rod (2) to slide inwards, enabling the armrest body (6) to be stored in the storage groove (B).
